# FASCICULE DE BREVET EUROPEEN

(11) **EP 1 946 251 B1**
(45) Date de publication et mention de la délivrance du brevet: **28.03.2012**
(21) Numéro de dépôt: 06820239.9
(22) Date de dépôt: 19.10.2006
(51) Int. Cl.: G06K 19/07, G06K 19/077, G06K 7/08, G06K 19/073

(54) **DISPOSITIF D'IDENTIFICATION ET DE PROTECTION D'UN ELEMENT DONT ON SOUHAITE CONNAITRE L'INTEGRITE**
EINRICHTUNG ZUM IDENTIFIZIEREN UND SCHÜTZEN EINES ELEMENTS, DESSEN INTEGRITÄT BESTIMMT WERDEN SOLL
DEVICE FOR IDENTIFYING AND PROTECTING AN ELEMENT WHOSE INTEGRITY IS DESIRED TO BE KNOWN

(30) Priorité: 19.10.2005 FR 0510647
(43) Date de publication de la demande: 23.07.2008
(73) Titulaire: Bara, Nicolas, 60240 La Villetertre (FR); Lo-Re, Bruno, 941000 Saint-Maur-des-Fossés (FR)
(72) Inventeur: Bara, Nicolas, 60240 La Villetertre (FR); Lo-Re, Bruno, 941000 Saint-Maur-des-Fossés (FR)
(74) Mandataire: Novagraaf Technologies
(86) Numéro de dépôt international: PCT/FR2006/002350
(87) Numéro de publication internationale: WO 2007/045766

(56) Documents cités:
- WO-A-95/15622
- WO-A-03/100721

## Description

L'invention concerne un dispositif d'identification et de protection destiné à être associé à un élément dont on souhaite connaître l'intégrité, ainsi qu'un ensemble d'identification et de protection comprenant un tel dispositif et un appareil de lecture/écriture d'un tel dispositif.

L'invention se rapporte au domaine de l'identification par étiquette électronique dont on peut lire le contenu à distance et notamment les puces RFID. De telles étiquettes sont utilisées dans de nombreuses applications d'identification sans contact, telles que le contrôle d'accès (badge d'identification), la billetterie (ticket de transport), la sécurité d'état (passeport), l'identification d'échantillons ou de containers, etc. Les informations contenues sur l'étiquette sont par exemple des informations de provenance, de dates, de contenu, etc. L'étiquette d'identification tend notamment à remplacer le code barre comme moyen d'identification.

L'étiquette est associée à une antenne permettant de lire le contenu de l'étiquette à distance au moyen d'un dispositif de lecture à distance.

Dans certaines applications, on souhaite connaître l'état d'inviolabilité de l'élément portant l'étiquette d'identification. C'est-à-dire que l'on souhaite savoir s'il a été porté atteinte à cet élément, par exemple savoir si un récipient contenant un échantillon a été ouvert puis refermé.

Des moyens physiques, telles qu'une bande de sécurité, sont disponibles pour vérifier cet état d'inviolabilité. Cependant, il peut être utile d'obtenir cette information au niveau du dispositif de lecture sans avoir de vérification physique de l'élément portant l'étiquette d'identification.

Il est connu d'agencer l'antenne sur l'élément portant l'étiquette de telle façon que cette antenne se rompe lorsque l'on porte atteinte à l'élément. De la sorte, lorsque l'intégrité de l'élément n'est plus garantie, le contenu de l'étiquette ne peut plus être lu car l'antenne n'est plus apte à émettre des informations, ceci signifiant que l'élément a été ouvert.

Cependant, ce type de système empêche la lecture ultérieure de l'étiquette. L'étiquette n'est donc plus utilisable et les informations qu'elle contenait ne sont plus lisibles. Or les informations contenues sur l'étiquette sont toujours utiles, bien que l'on ait porté atteinte à l'intégrité de l'élément.

Le document WO 95/15622 décrit un dispositif d'identification et de protection destiné à être associé à une élément dont on souhaite connaître l'intégrité.

L'invention vise à pallier ces inconvénients en proposant un dispositif d'identification et de protection comprenant deux antennes couplées entre elles, les antennes permettant de lire le contenu de l'étiquette et l'une des antennes permettant d'informer si l'on a porté atteinte à l'intégrité de l'élément ou non par rupture ou écartement de cette antenne.

A cet effet et selon un premier aspect, l'invention concerne un dispositif d'identification et de protection destiné à être associé à un élément dont on souhaite connaître l'intégrité, ledit dispositif comprenant une étiquette d'identification électronique associée à une première antenne agencée pour permettre de lire le contenu de l'étiquette à distance, ledit dispositif comprenant au moins une deuxième antenne couplée à la première antenne, ladite deuxième antenne étant agencée pour permettre de lire le contenu de l'étiquette à distance, ladite deuxième antenne étant destinée à être associée à l'élément de sorte à ce que le couplage entre la première et la deuxième antennes est rompu lorsque l'on porte atteinte à l'intégrité dudit élément

Ainsi, lorsque les informations contenues sur l'étiquette peuvent être lues par l'intermédiaire de la deuxième antenne et de la première antenne, cela signifie que l'on a pas porté atteinte à l'intégrité de l'élément. Au contraire, lorsque les informations sont lues par l'intermédiaire de la première antenne seulement, cela signifie que l'on a porté atteinte à l'intégrité de l'élément. Dans les deux cas, l'étiquette peut toujours être lue et les informations qu'elle contient ne sont pas perdues.

Selon une réalisation, le couplage est rompu par ouverture de la deuxième antenne lorsque l'on porte atteinte à l'intégrité de l'élément. Dans ce cas, le couplage est rompu définitivement.

Selon une variante de cette réalisation, l'ouverture de la deuxième antenne est une rupture de ladite antenne lorsque l'on porte atteinte à l'intégrité de l'élément.

Selon d'autres variantes, l'ouverture de la deuxième antenne est due à une dégradation de ladite antenne en fonction du milieu environnant, par exemple dégradation de l'antenne au bout d'un certain temps ou lorsque l'on dépasse une température prédéfinie.

Selon une autre réalisation, le couplage est rompu par éloignement entre la deuxième antenne et la première antenne lorsque l'on porte atteinte à l'intégrité de l'élément. Dans ce cas, la rupture du couplage est réversible, il est possible d'établir à nouveau le couplage en rapprochant la deuxième antenne de la première antenne.

La première et la deuxième antennes peuvent être couplées par voie électromagnétique sans contact entre lesdites antennes.

Selon un deuxième aspect, l'invention concerne un ensemble d'identification et de protection comprenant un dispositif d'identification et de protection tel que décrit ci-dessus ainsi qu'un appareil de lecture/écriture dudit dispositif, ledit appareil comprenant une première tête de lecture agencée pour lire le signal émis par la première antenne et au moins une deuxième tête de lecture agencée pour lire le signal émis par la deuxième antenne, ledit appareil étant agencé pour émettre un signal positif si la lecture des signaux se fait sur les deux antennes et un signal négatif si la lecture des signaux se fait sur la première antenne uniquement.

D'autres avantages et particularités de l'invention apparaîtront au cours de la description qui suit, faite en référence aux figures annexées.
La figure 1 est une représentation schématique d'un dispositif d'identification et de protection selon l'invention, l'élément étant intact.
La figure 2 est une représentation schématique du dispositif de la figure 1, lorsque l'on a porté atteinte à l'intégrité de l'élément.

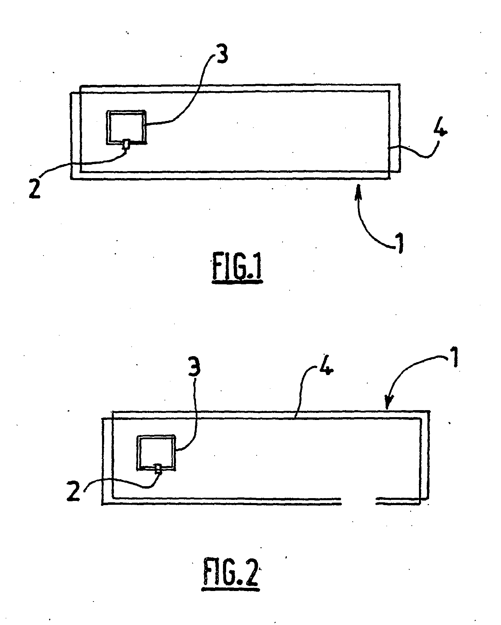

En référence à la figure 1, on décrit un dispositif d'identification et de protection 1 destiné à être associé à un élément (non représenté) dont on souhaite connaître l'intégrité.

À des fins de simplification, on décrira le dispositif 1 associé à un élément dont l'état d'intégrité consiste à savoir si l'élément a été ouvert ou non.

Le dispositif 1 comprend une étiquette d'identification électronique 2 dont le contenu peut être lu à distance. L'étiquette 2 est par exemple du type puce RFID. Une batterie d'alimentation peut lui être associée afin de l'alimenter en énergie, on parle alors d'étiquette active. Selon une autre réalisation, l'alimentation en énergie de l'étiquette 2 peut être réalisée par l'intermédiaire du dispositif de lecture à distance agencé pour lire le contenu de l'étiquette. Dans ce cas, l'étiquette n'est pas associée à une batterie et l'étiquette est dite passive.

L'étiquette 2 est associée avec une première antenne 3. La première antenne 3 est agencée de sorte que le contenu de l'étiquette 2 peut être lu à distance par un dispositif de lecture. De même, du contenu peut être inscrit sur l'étiquette 2 par l'intermédiaire du dispositif de lecture qui est alors un dispositif de lecture/écriture.

La première antenne 3 est par exemple associée électriquement avec l'étiquette 2, c'est-à-dire qu'il existe une connexion électrique entre l'antenne 3 et l'étiquette 2. Selon une autre réalisation, l'antenne 3 peut être couplée à l'étiquette 2 sans contact au moyen d'un couplage électromagnétique.

La première antenne 3 est disposée à proximité de l'étiquette 2 sur l'une des parties de l'élément qui reste intègre si l'élément est ouvert. Par exemple dans le cas d'un récipient comprenant un corps et un bouchon, l'étiquette 2 et la première antenne 3 sont disposées intégralement sur le corps du récipient. De la sorte, on s'assure que l'on peut toujours lire le contenu de l'étiquette 2, même si l'on porte atteinte à l'intégrité de l'élément. La première antenne peut avoir différentes formes selon les réalisations et les contraintes de géométrie de l'élément avec lequel le dispositif 1 est destiné à être associé.

Le dispositif 1 comprend en outre une deuxième antenne 4 couplée à la première antenne 3. Selon la réalisation représentée sur les figures, la deuxième antenne 4 est couplée par voie électromagnétique avec la première antenne 3, c'est-à-dire qu'il n'y a pas de contact électrique entre la première et la deuxième antennes: Le couplage électromagnétique consiste à accorder et à mettre en résonance les deux antennes afin de transmettre une modulation électromagnétique représentant le contenu de l'étiquette 2.

La deuxième antenne 4 est destinée à être disposée au moins en partie sur la partie de l'élément à laquelle on peut porter atteinte. Ainsi, dans le cas de l'élément comprenant un corps de récipient et un bouchon, la deuxième antenne 4 s'étend au moins en partie sur le bouchon. La deuxième antenne 4 peut présenter différentes formes selon les réalisations et les contraintes de géométrie de l'élément. Une contrainte de forme est également qu'il faut s'assurer que le couplage électromagnétique est assuré avec la première antenne 3.

Selon la réalisation représentée sur les figures, la deuxième antenne 4 entoure la première antenne 3 et présente une dimension très supérieure à celle de la première antenne 3.

En fonctionnement normal, lorsque l'élément n'a pas été ouvert ou que l'on n'a pas porté atteinte à son intégrité, le contenu de l'étiquette 2 peut être lu par l'intermédiaire de la deuxième antenne 4 et/ou de la première antenne 3. On obtient ainsi une information supplémentaire indiquant que l'élément a préservé son intégrité.

Selon la réalisation représentée sur les figures, lorsque la deuxième antenne 4 ne s'étend qu'en partie sur la partie de l'élément à laquelle on peut porter atteinte, la deuxième antenne 4 est agencée pour se rompre, comme représenté sur la figure 2, lorsque l'on porte atteinte à l'intégrité de l'élément. De la sorte, lorsque l'élément a été ouvert, le contenu de l'étiquette 2 ne peut être lu que par l'intermédiaire de la première antenne 3, la deuxième antenne 4 ne fonctionnant plus du fait de sa rupture. On obtient ainsi une information supplémentaire indiquant que l'on a porté atteinte à l'intégrité de l'élément.

Outre la rupture de la deuxième antenne 4, on peut envisager selon les réalisations que la deuxième antenne 4 s'ouvre par dégradation du matériau dans lequel est réalisée l'antenne 4. Ainsi, si l'information d'intégrité consiste à savoir si l'élément a été maintenu dans une certaine plage de températures lors de son stockage, l'antenne 4 peut être réalisée dans un matériau se dégradant si l'on dépasse une température prédéfinie. Un matériau adapté à une telle utilisation est alors choisi. Si l'information d'intégrité consiste à savoir si une date de péremption n'a pas été dépassée, l'antenne 4 peut être réalisée dans un matériau se dégradant au bout d'un certain temps correspondant à cette date de péremption. De même, on peut prévoir d'autres matériaux pour l'antenne 4 en fonction de ce que l'on souhaite savoir sur l'intégrité de l'élément, par exemple une antenne se dégradant ou n'émettant plus en milieu aqueux, acide ou basique, etc.

Selon une autre réalisation, lorsque la deuxième antenne 4 s'étend en totalité sur la partie de l'élément à laquelle on peut porter atteinte, par exemple un couvercle qui peut être ouvert ou fermé, la deuxième antenne 4 s'écarte de la première antenne 3 et de l'étiquette 2 lorsque l'élément est ouvert. Le couplage électromagnétique entre les deux antennes est alors rompu et on ne peut lire le contenu de l'étiquette 2 que par l'intermédiaire de la première antenne 3. On obtient ainsi une information supplémentaire indiquant que l'on a porté atteinte à l'intégrité de l'élément.

Dans tous les cas, le contenu de l'étiquette 2 reste toujours lisible par la première antenne et ce contenu n'est pas perdu lorsque l'on porte atteinte à l'intégrité de l'élément.

Selon d'autres réalisations, on peut prévoir d'autres antennes au-delà de la deuxième antenne 4. Ces antennes sont couplées les unes avec les autres et sont agencées pour les couplages soient rompus comme indiqué plus haut si l'on porte atteinte à l'intégrité de l'élément. On obtient ainsi plusieurs niveaux de protection de l'intégrité. On peut par exemple prévoir une antenne se dégradant en fonction de la température couplée à une antenne agencée pour se rompre en cas d'ouverture de l'élément, etc.

On décrit à présent un ensemble d'identification et de protection comprenant un dispositif d'identification et de protection tel que décrit ci-dessus ainsi qu'un appareil de lecture/écriture de ce dispositif. L'appareil de lecture/écriture comprend une première tête de lecture agencée pour lire le signal émis par la première antenne 3. L'appareil comprend en outre au moins une deuxième tête de lecture agencée pour lire le signal émis par la deuxième antenne 4. L'appareil peut ainsi lire à la fois le signal émis par la première antenne 3 et celui émis par la deuxième antenne 4. L'appareil est agencé pour émettre un signal positif lorsque la lecture des signaux se fait sur les deux antennes et un signal négatif si la lecture des signaux se fait sur la première antenne 3 uniquement. Le signal positif est par exemple une diode s'illuminant lorsque les deux signaux sont lus et le signal négatif une diode ne s'illuminant pas. Le signal émis par l'appareil peut également être transféré à un système de traitement.

Selon une réalisation, l'appareil est agencé pour transmettre, par l'intermédiaire d'une tête d'écriture, le signal positif ou négatif à l'étiquette 2 afin d'inscrire l'information d'intégrité sur cette étiquette.

## Revendications

1. Dispositif d'identification et de protection destiné à être associé à un élément dont on souhaite connaître l'intégrité, ledit dispositif comprenant une étiquette d'identification électronique (2) associée à une première antenne (3) agencée pour permettre de lire le contenu de l'étiquette (2) à distance, au moins une deuxième antenne (4) couplée à la première antenne (3), ladite deuxième antenne étant agencée pour permettre de lire le contenu de l'étiquette (2) à distance, ladite deuxième antenne étant destinée à être associée à l'élément de sorte à ce que le couplage entre la première (3) et la deuxième antennes (4) est rompu lorsque l'on porte atteinte à l'intégrité dudit élément **caractérisé en ce que** le couplage est rompu à l'ouverture de la deuxième antenne (4) par dégradation du matériau de ladite antenne en fonction de la nature du milieu environnant.

2. Dispositif d'identification et de protection selon la revendication 1, **caractérisé en ce que** l'étiquette (2) et la première antenne (3) sont destinées à être disposées sur une partie de l'élément dont l'intégrité est toujours préservée, la deuxième antenne (4) s'étendant au moins en partie sur la partie de l'élément dont l'intégrité peut être atteinte.

3. Dispositif d'identification et de protection selon la revendication 1 ou 2 **caractérisé en ce que** l'ouverture de la deuxième antenne (4) est réalisée par cassage de ladite antenne.

4. Dispositif d'identification et de protection selon la revendication 1 ou 2, **caractérisé en ce que** le couplage est rompu par éloignement entre la deuxième antenne (4) et la première antenne (3) lorsque l'on porte atteinte à l'intégrité de l'élément, le couplage entre les antennes pouvant être rétabli par rapprochement desdites antennes.

5. Dispositif d'identification et de protection selon l'une quelconque des revendications 1 à 4, **caractérisé en ce que** la première (3) et la deuxième antennes (4) sont couplées par voie électromagnétique sans contact entre lesdites antennes.

6. Dispositif d'identification et de protection selon l'une quelconque des revendications 1 à 5, **caractérisé en ce que** le contenu de l'étiquette (2) est lu par l'intermédiaire de la deuxième antenne (4) et/ou de la première antenne (3) lorsque l'on n'a pas porté atteinte à l'intégrité de l'élément et par l'intermédiaire de la première antenne (3) uniquement lorsque l'on a porté atteinte à l'intégrité dudit élément.

7. Dispositif d'identification et de protection selon l'une quelconque des revendications 1 à 6, **caractérisé en ce que** l'étiquette d'identification électronique (2) est associée à une batterie alimentant ladite étiquette en énergie.

8. Dispositif d'identification et de protection selon l'une quelconque des revendications 1 à 6, **caractérisé en ce que** l'étiquette d'identification électronique (2) est alimentée en énergie par l'intermédiaire du dispositif de lecture à distance agencé pour lire le contenu de l'étiquette.

9. Ensemble d'identification et de protection comprenant un dispositif d'identification et de protection selon l'une quelconque des revendications 1 à 8 ledit ensemble étant **caractérisé en ce qu'**il comprend un appareil de lecture/écriture dudit dispositif, ledit appareil comprenant une première tête de lecture agencée pour lire le signal émis par la première antenne (3) et au moins une deuxième tête de lecture agencée pour lire le signal émis par la deuxième antenne (4), ledit appareil étant agencé pour émettre un signal positif si la lecture des signaux se fait sur les deux antennes et un signal négatif si la lecture des signaux se fait sur la première antenne (3) uniquement.

10. Ensemble d'identification et de protection selon la revendication 9, **caractérisé en ce que** l'appareil est agencé pour transmettre, par l'intermédiaire d'une tête d'écriture, le signal positif ou négatif à l'étiquette (2) afin d'inscrire l'information d'intégrité sur ladite étiquette.

## Claims

1. Identification and protection device intended to be combined with an element of which one wishes to know the integrity, the said device comprising an electronic identification tag (2) combined with a first aerial (3) arranged to allow the content of the tag (2) to be read at a distance, at least a second aerial (4) coupled with the first aerial (3), the said second aerial being arranged to allow the content of the tag (2) to be read at a distance, the said second aerial being intended to be combined with the element in such a way that the coupling between the first (3) and second aerial (4) is broken when the integrity of the said element is violated, **characterised in that** the coupling is broken on opening the second aerial (4) by degradation of the data of the said aerial by means of the nature of the surrounding area.

2. Identification and protection device according to claim 1, **characterised in that** the tag (2) and the first aerial (3) are intended to be arranged on a section of the element of which the integrity is always maintained, the second aerial (4) extending at least partly on the section of the element of which the integrity can be violated.

3. Identification and protection device according to claim 1 or 2, **characterised in that** the opening of the second aerial (4) is achieved by decryption of the said aerial.

4. Identification and protection device according to claim 1 or 2, **characterised in that** the coupling is broken by distance between the second aerial (4) and the first aerial (3) when the integrity of the element is violated, the coupling between the aerials being able to be re-established by bringing the said aerials together.

5. Identification and protection device according to any one of claims 1 to 4, **characterised in that** the first (3) and second aerial (4) are coupled electromagnetically without contact between the said aerials.

6. Identification and protection device according to any one of claims 1 to 5, **characterised in that** the content of the tag (2) is read by means of the second aerial (4) and/or the first aerial (3) when the integrity of the element is not violated, and by means of the first aerial (3) only when the integrity of the said element has been violated.

7. Identification and protection device according to any one of claims 1 to 6, **characterised in that** the identification tag (2) is connected to a battery powering the said tag.

8. Identification and protection device according to any one of claims 1 to 6, **characterised in that** the electronic identification tag (2) is powered by means of the distance reading device arranged to read the content of the tag.

9. Identification and protection assembly including an identification and protection device according to any one of claims 1 to 8, the said assembly being **characterised in that** it includes a reading/writing device, the said device comprising a first reading head arranged to read the signal emitted by the first aerial (3) and at least a second reading head arranged to read the signal emitted by the second aerial (4), the said device being arranged to emit a positive signal if reading the signals happens on the two aerials and a negative signal if reading the signals only happens on the first aerial (3).

10. Identification and protection assembly according to claim 9, **characterised in that** the device is arranged to transmit, by means of a writing head, the positive or negative signal to the tag (2) in order to write the integrity information on the said tag.

## Patentansprüche

1. Einrichtung zum Identifizieren und Schützen, die zur Verbindung mit einem Element bestimmt ist, dessen Unversehrtheit man kennen möchte, wobei die Einrichtung umfasst: eine elektronisches Identifikations-Etikett (2), das einer ersten Antenne (3) zugeordnet ist, die dazu eingerichtet ist, den Inhalt des Etiketts (2) aus der Ferne lesen zu lassen, wenigstens eine zweite Antenne (4), die mit der ersten Antenne (3) gekoppelt ist, wobei die zweite Antenne dazu eingerichtet ist, den Inhalt des Etiketts (2) aus der Ferne lesen zu lassen, wobei die zweite Antenne dazu bestimmt ist, dem Element derart zugeordnet zu werden, dass die Kopplung zwischen der ersten (3) und der zweiten Antenne (4) unterbrochen wird, wenn die Unversehrtheit des Elementes beeinträchtigt ist, **dadurch gekennzeichnet**, das die Kopplung durch Öffnen der zweiten Antenne (4) durch Schädigung des Materials dieser Antenne als Funktion der Art des Umgebungsmediums unterbrochen wird.

2. Einrichtung zum Identifizieren und Schützen nach Anspruch 1, **dadurch gekennzeichnet, dass** das Etikett (2) und die erste Antenne (3) dazu bestimmt sind, auf einem Teil des Elementes angebracht zu werden, dessen Unversehrtheit stets bewahrt wird, wobei die zweite Antenne (4) sich wenigstens teilweise auf den Teil des Elementes, dessen Integrität nicht beeinträchtigt werden kann, erstreckt.

3. Einrichtung zum Identifizieren und Schützen nach Anspruch 1 der 2, **dadurch gekennzeichnet, dass** das Öffnen der zweiten Antenne (4) durch Brechen dieser Antenne realisiert wird.

4. Einrichtung zum Identifizieren und Schützen nach Anspruch 1 oder 2, **dadurch gekennzeichnet, dass** die Kopplung durch Entfernung der zweiten Antenne (4) von der ersten Antenne (3) unterbrochen wird, wenn die Unversehrtheit des Elementes beeinträchtigt ist, wobei die Kopplung zwischen den Antennen durch Annäherung der Antennen wiederhergestellt werden kann.

5. Einrichtung zum Identifizieren und Schützen nach einem der Ansprüche 1 bis 4, **dadurch gekennzeichnet, dass** die erste (3) und die zweite Antenne (4) ohne Kontakt zwischen den Antennen elektromagnetisch gekoppelt sind.

6. Einrichtung zum Identifizieren und Schützen nach einem der Ansprüche 1 bis 5, **dadurch gekennzeichnet, dass** der Inhalt des Etiketts (2) mit Hilfe der zweiten Antenne (4) und/oder der ersten Antenne (3) gelesen wird, wenn die Unversehrtheit des Elementes nicht beeinträchtigt wurde, und mit Hilfe nur der ersten Antenne (3) gelesen wird, wenn die Unversehrtheit des Elementes beeinträchtigt wurde.

7. Einrichtung zum Identifizieren und Schützen nach einem der Ansprüche 1 bis 6, **dadurch gekennzeichnet, dass** das elektronische Identifikations-Etikett (2) einer Batterie zum Versorgen des Etiketts mit Energie zugeordnet ist.

8. Einrichtung zum Identifizieren und Schützen nach einem der Ansprüche 1 bis 6, **dadurch gekennzeichnet, dass** das elektronische Identifikations-Etikett (2) mit Hilfe der entfernten Lesevorrichtung, die zum Lesen des Inhalts des Etiketts eingerichtet ist, mit Energie versorgt wird.

9. Vorrichtung zum Identifizieren und Schützen mit einer Einrichtung zum Identifizieren und Schützen nach einem der Ansprüche 1 bis 8, wobei die Vorrichtung **dadurch gekennzeichnet ist, dass** sie umfasst: ein Gerät zum Lesen/Schreiben der Einrichtung, wobei das Gerät einen ersten Lesekopf aufweist, der zum Lesen des von der ersten Antenne (3) gesandten Signals eingerichtet ist, und wenigstens einen zweiten Lesekopf, der zum Lesen des von der zweiten Antenne (4) gesandten Signals eingerichtet ist, wobei das Gerät dazu eingerichtet ist, ein positives Signal zu senden, wenn das Lesen der Signale mit den beiden Antennen ausgeführt wird, und ein negatives Signal, wenn das Lesen der Signale mit nur der ersten Antenne (3) ausgeführt wird.

10. Vorrichtung zum Identifizieren und Schützen nach Anspruch 9, **dadurch gekennzeichnet, dass** das Gerät dazu eingerichtet ist, mittels eines Schreibkopfs das positive oder das negative Signal an das Etikett (2) zu übertragen, um Information in Bezug auf die Unversehrtheit des Etiketts aufzuzeichnen.
